# EUROPEAN PATENT APPLICATION

(11) **EP 4 311 014 A1**
(43) Date of publication of application: **24.01.2024**
(21) Application number: 22771603.2
(22) Date of filing: 07.02.2022
(51) Int. Cl.: H01M 50/538, H01M 10/04, H01M 50/586

(54) **CYLINDRICAL SECONDARY BATTERY**

(30) Priority: 18.03.2021 KR 20210035283
(71) Applicant: Samsung SDI Co., Ltd., Yongin-si, Gyeonggi-do 17084 (KR)
(72) Inventor: YU, Gwan Hyeon, Yongin-si, Gyeonggi-do 17084 (KR); PARK, Jung Hyun, Yongin-si, Gyeonggi-do 17084 (KR); SHIN, Joo Youn, Yongin-si, Gyeonggi-do 17084 (KR); SHIN, Ye Eun, Yongin-si, Gyeonggi-do 17084 (KR)
(74) Representative: Marks & Clerk LLP
(86) International application number: PCT/KR2022/001822
(87) International publication number: WO 2022/196937

(57) **Abstract**

An embodiment of the present invention relates to a cylindrical secondary battery which may comprise: a cylindrical can; an electrode assembly accommodated in the can and formed by stacking a first electrode plate, a separator, and a second electrode plate and winding in a cylindrical shape, wherein a first electrode uncoated portion of the first electrode plate protruding at one end in the longitudinal direction and a second electrode uncoated portion of the second electrode plate protruding at the other end thereof; a cap assembly coupled to one side of the can in a state in which the electrode assembly is accommodated in the can; a first electrode current collector plate which is located between the first electrode uncoated portion and the can and electrically connected to the first electrode uncoated portion and the cap assembly; a second electrode current collector plate which is located between the second electrode uncoated portion and the cap assembly and electrically connected to the second electrode uncoated portion and the can; a first auxiliary plate which is located between the first electrode uncoated portion and the first electrode current collector plate and electrically connected to the first electrode uncoated portion and the first electrode current collector plate; and a second auxiliary plate which is located between the second electrode uncoated portion and the second electrode current collector plate and electrically connected to the second electrode uncoated portion and the second electrode current collector plate.

## Description

### TECHNICAL FIELD

An embodiment of the present invention relates to a cylindrical secondary battery having an improved current collecting structure.

### BACKGROUND ART

In general, a cylindrical secondary battery includes a cylindrical electrode assembly, a cylindrical can accommodating the electrode assembly and electrolyte, and a cap assembly coupled to an upper opening of the can to seal the can and allow current generated in the electrode assembly to flow to an external device.

For a current collecting structure of an electrode assembly, a method of collecting a plurality of substrates protruding from an electrode plate and connecting the same with a conductive wire is generally used to reduce resistance of the electrode assembly. However, with this structure, unlike a portion where an active material of the electrode plate is applied, there are many empty spaces in the protruding portion of the substrate, so that the protruding substrates may be bent or compacted when vibration occurs. Accordingly, the amount of flow of the electrode assembly increases and the stress transmitted to welding points between the substrates and a current collector plate increases, so that the current collecting structure itself is vulnerable to vibration. In addition, the electrode assembly may be damaged due to the occurrence of pinholes due to heat penetration during welding.

As a technique for solving the above problem, there is a method in which a plurality of substrates are collected to connect the same to lead tabs, and terminals of a can is directly welded to a current collector plate. However, this structure is disadvantageous in that design freedom is reduced due to a narrow gap between the electrode assembly and the current collector, additional material cost and process due to the addition of lead tabs, and increased component resistance.

The above information disclosed in this Background section is only for enhancement of understanding of the background of the invention and therefore it may contain information that does not constitute prior art.

### DESCRIPTION OF EMBODIMENTS

### TECHNICAL PROBLEM

An object of the present invention is to provide a cylindrical secondary battery having improved vibration resistance and an improved current collecting structure.

### SOLUTION TO PROBLEM

A cylindrical secondary battery according to an embodiment of the present invention may include: a cylindrical can; an electrode assembly accommodated in the can and formed by stacking a first electrode plate, a separator, and a second electrode plate and winding in a cylindrical shape, wherein a first electrode uncoated portion of the first electrode plate protruding at one end in the longitudinal direction and a second electrode uncoated portion of the second electrode plate protruding at the other end thereof; a cap assembly coupled to one side of the can in a state in which the electrode assembly is accommodated in the can; a first electrode current collector plate which is located between the first electrode uncoated portion and the can and electrically connected to the first electrode uncoated portion and the cap assembly; a second electrode current collector plate which is located between the second electrode uncoated portion and the cap assembly and electrically connected to the second electrode uncoated portion and the can; a first auxiliary plate which is located between the first electrode uncoated portion and the first electrode current collector plate and electrically connected to the first electrode uncoated portion and the first electrode current collector plate; and a second auxiliary plate which is located between the second electrode uncoated portion and the second electrode current collector plate and electrically connected to the second electrode uncoated portion and the second electrode current collector plate.

The first electrode current collector and the second electrode current collector may have the same shape, but may be disposed to be symmetrical to each other.

The first auxiliary plate and the second auxiliary plate may have the same size as the first electrode collector plate and the second electrode collector plate.

The first auxiliary plate may be formed of the same material as the first electrode current collector, and the second auxiliary plate may be formed of the same material as the second electrode current collector.

The first auxiliary plate and the second auxiliary plate may be metal foils or metal thin films.

The first auxiliary plate may be made of copper, and the second auxiliary plate may be made of aluminum.

The first auxiliary plate may have a thickness of 8±1 µm, and the second auxiliary plate may have a thickness of 12±1 µm.

Each of the first electrode collector plate and the second electrode collector plate may be welded to the first electrode uncoated portion and the second electrode uncoated portion, respectively, in a state in which the first auxiliary plate and the second auxiliary plate are disposed.

### ADVANTAGEOUS EFFECTS OF DISCLOSURE

According to an embodiment of the present invention, an auxiliary plate is provided between a current collector plate and a substrate, and thus shock caused by external vibration can be absorbed. Accordingly, it is possible to minimize a problem that the substrate of the electrode assembly is pressed or compacted. In addition, generation of pinholes may be suppressed by reducing the amount of heat penetrated into the electrode assembly by the auxiliary plate. As a result, weldability and cell stability are improved, and a yield rate is increased by reducing short-circuit defects.

### BRIEF DESCRIPTION OF DRAWINGS

FIG. 1 is a longitudinal cross-sectional view showing a cylindrical secondary battery according to an embodiment of the present invention.
FIG. 2 is a perspective view illustrating an electrode assembly and a current collecting structure according to FIG. 1.
FIG. 3 is an enlarged perspective view of the current collecting structure according to FIG. 2.

### BEST MODE

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this invention will be thorough and complete and will convey the aspects and features of the present invention to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a cylindrical secondary battery according to an embodiment of the present invention will be described in detail with reference to the accompanying drawings.

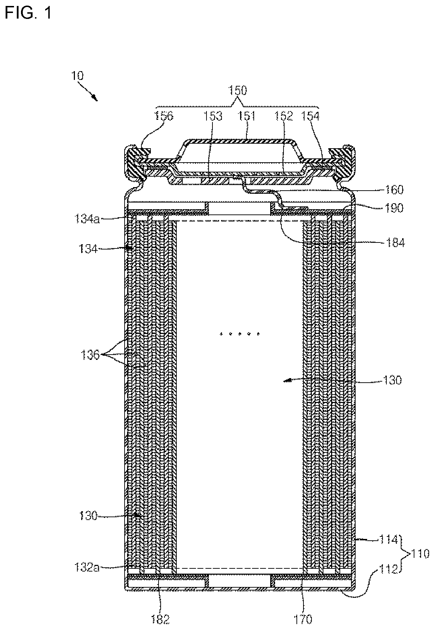

FIG. 1 is a longitudinal cross-sectional view showing a cylindrical secondary battery according to an embodiment of the present invention.

As shown in FIG. 1, the cylindrical secondary battery 10 according to an embodiment of the present invention may include a cylindrical can 110, an electrode assembly 130 inserted into the can 110, a cap assembly 150 coupled to one end of the can 110, and a first electrode current collector 170 and a second electrode current collector 190 electrically connecting the electrode assembly 130 to the cap assembly 150.

The can 110 includes a circular bottom portion 110 and a side portion 130 extending upward from the bottom portion 110, and has a cylindrical shape in which an upper end of the side portion 130 is open (hereinafter referred to as an opening). In the manufacturing process of a secondary battery 1000, the electrode assembly 300 is inserted into the can 100 together with the electrolyte solution through the opening of the can 100. The electrode assembly 130 is electrically connected to the can 110 and the cap assembly 150 by the first electrode plate 132 and the second electrode plate 134. The can 100 may be formed of steel, steel alloy, nickel-plated steel, nickel-plated steel alloy, aluminum, aluminum alloy, or an equivalent thereof, but the material is not limited thereto. In a state in which the electrode assembly 130 is accommodated inside the can 110, the cap assembly 150 is inserted into the opening to close the opening.

The electrode assembly 130 includes a first electrode plate 132, which is a negative electrode plate coated with a negative electrode active material (e.g., graphite, carbon, etc.), a second electrode plate 134, which is a positive electrode plate coated with a positive electrode active material (e.g., transition metal oxide (LiCoO2, LiNiO2, LiMn204, etc.)), and a separator 136 disposed between the first electrode plate 132 and the second electrode plate 134 to prevent a short circuit and allow only the movement of lithium ions. The first electrode plate 132, the second electrode plate 134, and the separator 136 may be wound in a substantially cylindrical shape and may be accommodated inside the can 100. The first electrode plate 132 may be made of copper (Cu) or nickel (Ni) foil, the second electrode plate 134 may be made of aluminum (Al) foil, and the separator 136 may be made of polyethylene (PE) or polypropylene (PP), but the materials are not limited in the present invention.

An uncoated portion to which no active material is applied may be formed on the first electrode plate 132 and the second electrode plate 134. For example, the first electrode plate 132, which is a negative electrode plate, may have, at a lower end, a first electrode uncoated portion 132a to which the negative electrode active material is not applied, and the second electrode plate 134, which is a positive electrode plate, may have, at a top end, a second electrode uncoated portion 134a to which the positive electrode active material is not applied. A first electrode current collector plate 170 and a second electrode current collector plate 190, which will be described later, are respectively connected to the first electrode uncoated portion 132a and the second electrode uncoated portion 134a to electrically connect the can 110 and the electrode assembly 130.

The cap assembly 150 serves to seal the can 110 by being coupled to the top opening of the can 110. The cap assembly 150 includes a cap up 151 disposed on the outermost side, a safety vent 152 coupled to the lower portion of the cap up 151, a cap down 153 coupled to the lower portion of the safety vent 152, an insulator 154 inserted between the safety vent 152 and the cap down 153, and an insulating gasket 156 inserted between the cap assembly 150 and the can 110. The cap up 151 has a terminal portion protruding upward and is electrically connected to the outside of the secondary battery 10. When gas is generated inside the safety vent 152 due to overcharging or abnormality of the secondary battery 10, the safety vent 152 is broken when the gas pressure exceeds a certain pressure, and the gas is released to prevent damage to the secondary battery 10. The cap down 153 supports the safety vent 152 from the lower portion, and a through hole is formed in the center thereof, and thus a part of the safety vent 152 protrudes through the through hole and is electrically connected to the cap down 153. The insulator 154 insulates the safety vent 152 and the cap down 153 from each other. This is only an exemplary configuration, and the configuration of the cap assembly 150 is not limited to the aforementioned configuration.

Hereinafter, a current collecting structure for electrically connecting the electrode assembly 130 to the can 110 will be described in detail.

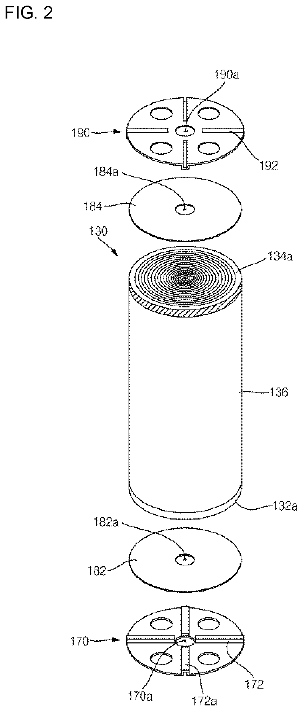

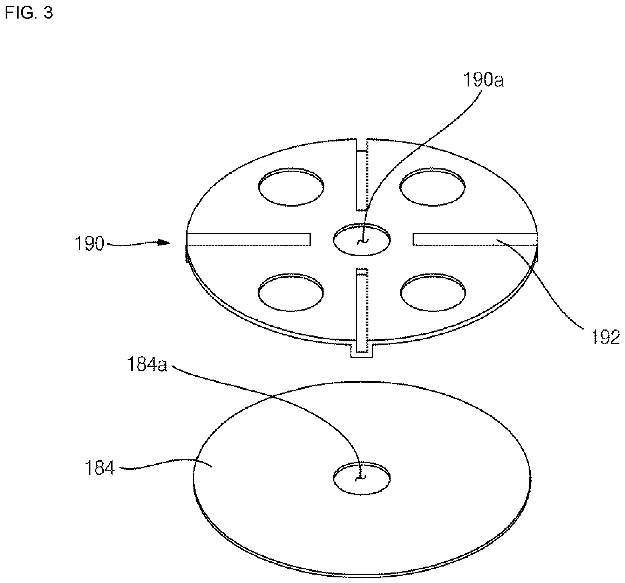

FIG. 2 is a perspective view illustrating an electrode assembly and a current collecting structure according to FIG. 1. FIG. 3 is an enlarged perspective view of the current collecting structure according to FIG. 2.

As shown in FIG. 2, the current collector plate according to an embodiment of the present invention may include a first electrode current collector plate 170 electrically connecting the first electrode plate 132, which is a negative electrode plate, to the bottom surface of the can 110 and a second electrode current collector plate 190 electrically connecting the second electrode plate 134 to the cap assembly 150. Accordingly, the first electrode current collector plate 170 may be referred to as a negative electrode current collector plate, and the second electrode current collector plate 190 may be referred to as a positive electrode current collector plate.

The first electrode current collector plate 170 has a substantially disc shape and electrically connects the first electrode plate 132 to the bottom surface 111 of the can 110. To this end, a plurality of substrate current collectors 172 may be formed on the first electrode current collector plate 170 to be electrically connected to the first electrode uncoated portion 132a. An auxiliary plate 182 (hereinafter referred to as a first auxiliary plate) may be inserted between the first electrode current collector plate 170 and the first electrode uncoated portion 132a (for convenience, an auxiliary plate inserted into the side of the first electrode current collector plate 170 is defined as a first auxiliary plate 182, and an auxiliary plate inserted into the side of the second electrode current collector plate 190 is defined as a second auxiliary plate 184, which will later be described). The first electrode current collector plate 170 is welded to the first auxiliary plate 182, and the first auxiliary plate 182 is welded to the first electrode uncoated portion 132a, and thus the first electrode current collector plate 170 is electrically connected to the first electrode uncoated portion 132a by means of the first auxiliary plate 182. The first electrode current collector plate 170 and the can 110 may be electrically connected by direct contact and resistance welding, or may be electrically connected by a lead wire. During resistance welding of the first electrode current collector plate 170 and the can 110, in order to allow a welding rod to pass, a hollow is formed on the first electrode current collector plate 170 and the second electrode current collector plate 190 to be described later.

The substrate current collector 172 is formed to a predetermined length along the radial direction of the electrode assembly 130 (the radial direction of the first electrode current collector plate). The substrate current collector 172 protrudes along the radial direction in the remaining area except for a partial area of a central portion of the first electrode current collector plate 170. A circular hollow 170a may be formed in the central portion of the first electrode current collector plate 170. The direction in which the substrate current collector 172 protruding is in the direction of the cap assembly 150, that is, the direction away from the bottom surface 112 of the can 110. For example, four substrate current collectors 172 may protrude along the radial direction of the electrode assembly 130 at intervals of 90 degrees. Here, the radial length of the substrate current collector 172 may be a length obtained by subtracting the radius of the hollow 170a from the radius of the first electrode current collector plate 170. For example, the substrate current collector 172 may protrude in a rectangular or circular cross section. On the basis of FIG. 2, the first auxiliary plate 182 may be welded to the upper surface of the protruding surface of the substrate current collector 172. Accordingly, the upper surface of the substrate current collector 172 is defined as a welding surface 172a.

As shown in FIGS. 2 and 3, the second electrode current collector plate 190 may have the same structure as the first electrode current collector plate 170, and may be symmetrically installed to face the first electrode current collector plate 170 with the electrode assembly 130 interposed therebetween.

As shown in FIG. 3, the second electrode current collector plate 190 has a substantially disc shape and electrically connects the second electrode plate 134 to the safety vent 152. To this end, a plurality of substrate current collectors 192 may be formed on the second electrode current collector plate 190 to be electrically connected to the second electrode uncoated portion 134a. A second auxiliary plate 184 may be inserted between the second electrode current collector plate 190 and the second electrode uncoated portion 134a (which will be described later). The second electrode current collector plate 190 is welded to the second auxiliary plate 184, and the second auxiliary plate 184 is welded to the second electrode uncoated portion 134a, and thus the second electrode current collector plate 190 may be electrically connected to the second electrode uncoated portion 134a by means of the auxiliary plate 184. The second electrode current collector plate 190 may be electrically connected to the safety vent 152 of the cap assembly 150 by a lead wire 160 or a lead tab.

The substrate current collector 192 is formed to a predetermined length along the radial direction of the electrode assembly 130 (the radial direction of the second electrode current collector plate). The substrate current collector 192 protrudes along the radial direction in the remaining area except for a partial area of a central portion of the second electrode current collector plate 190. A circular hollow 190a may be formed in the central portion of the first electrode current collector plate 190. The direction in which the substrate current collector 192 protruding is in the opposite direction of the cap assembly 150, that is, the direction toward the bottom surface 112 of the can 110. For example, four substrate current collectors 192 may protrude along the radial direction of the electrode assembly 130 at intervals of 90 degrees. Here, the radial length of the substrate current collector 192 may be a length obtained by subtracting the radius of the hollow 190a from the radius of the first electrode current collector plate 190. For example, the substrate current collector 192 may protrude in a rectangular or circular cross section. On the basis of FIG. 2, the second auxiliary plate 184 may be welded to the lower surface of the protruding surface of the substrate current collector 192. Accordingly, the lower surface of the substrate current collector 192 is defined as a welding surface 192a.

During resistance welding of the first electrode current collector plate 170 and the can 110, in order to allow a welding rod to pass, a hollow is formed on the second electrode current collector plate 190. In addition, in order to improve the impregnability of the electrode assembly 130 when an electrolyte is injected into the can 110, a plurality of through holes, excluding the hollow, may be formed in the second electrode current collector plate 190.

Meanwhile, the auxiliary plates 182 and 184 are interposed between the first electrode current collector plate 170 and the first electrode uncoated portion 132a, and between the second electrode current collector plate 190 and the second electrode uncoated portion 134a, respectively. The auxiliary plates 182 and 184 may have a disk shape having the same size as the first electrode current collector plate 170 and the second electrode current collector plate 190. In addition, hollows 182a and 184a having the same size may be formed in the auxiliary plates 182 and 184 at positions corresponding to the positions of the hollows 170a and 190a formed in the first electrode current collector plate 170 and the second electrode current collector plate 190. The hollows 182a and 184a may serve as passages through which the lead wire 160 passes.

The auxiliary plates 182 and 184 may be thin films or foils made of the same or similar material as the first electrode current collector plate 170 and the second electrode current collector plate 190. For example, when the first electrode current collector plate 170 is a negative electrode plate, the first auxiliary plate 182 may be a copper foil or a copper thin film. The first auxiliary plate 182 may have a thickness of 8±1 *µ*m. This is an exemplary value, and the thickness of the first auxiliary plate 182 may be the same as that of the first electrode uncoated portion 132a.

Similarly, when the second electrode current collector plate 190 is a positive electrode plate, the second auxiliary plate 184 may be in the form of an aluminum foil or an aluminum thin film. The second auxiliary plate 184 may have a thickness of 12±1 *µ*m. This is an exemplary value, and the thickness of the second auxiliary plate 184 may be the same as that of the second electrode uncoated portion 134a.

When being welded to the first electrode uncoated portion 132a and the second electrode uncoated portion 134a, the auxiliary plates 182 and 184 may be immediately brought into close contact with the uncoated portions 132a and 134a without pre-compaction in which the uncoated portions 132a and 134a are previously pressed and compacted, and the current collector plates 170 and 190 may then be raised and welded. To this end, although not shown, welding may be performed after the auxiliary plates 182 and 184 and the current collector plates 170 and 190 are brought into close contact with the uncoated portions 132a and 134a by means of a separate jig or tool.

The first electrode uncoated portion 132a of the first electrode plate 132 and the second electrode uncoated portion 134a of the second electrode plate 134 protrude in the vertical direction of the electrode assembly 130, and thus, by providing separate lead tabs, a problem arises in that the capacity of the secondary battery 10 is reduced by the space for bending the lead tabs. When the uncoated portions are gathered and connected with a separate wire without a lead tab, there is a lot of empty space, so that the uncoated portions (substrates) are pressed and compacted when external vibration is generated and transmitted. Thus, the flow rate of the electrode assembly may be increased, and the stress transmitted to a welding point of the uncoated portion and the current collector plate may increase. However, in the present invention, a separate lead tab is not provided, and thus a decrease in capacity of the secondary battery 10 can be minimized.

In addition, according to the present invention, by providing an auxiliary plate between an uncoated portion of an electrode plate and a current collector plate, the amount of heat penetrating into the electrode assembly can be reduced and pinhole generation can be suppressed. As a result, weldability and cell stability are improved, and a yield rate is increased due to reduction in short-circuit defects.

What has been described above is only one embodiment for carrying out the present invention, and the present invention is not limited to the above-described embodiment. However, the technical spirit of the present invention lies in that anyone skilled in the art could make various changes, as claimed in the claims below, without departing from the gist of the present invention.

## Claims

1. A cylindrical secondary battery comprising:
a cylindrical can; an electrode assembly accommodated in the can and formed by stacking a first electrode plate, a separator, and a second electrode plate and winding in a cylindrical shape, wherein a first electrode uncoated portion of the first electrode plate protruding at one end in the longitudinal direction and a second electrode uncoated portion of the second electrode plate protruding at the other end thereof;
a cap assembly coupled to one side of the can in a state in which the electrode assembly is accommodated in the can;
a first electrode current collector plate which is located between the first electrode uncoated portion and the can and electrically connected to the first electrode uncoated portion and the cap assembly;
a second electrode current collector plate which is located between the second electrode uncoated portion and the cap assembly and electrically connected to the second electrode uncoated portion and the can;
a first auxiliary plate which is located between the first electrode uncoated portion and the first electrode current collector plate and electrically connected to the first electrode uncoated portion and the first electrode current collector plate; and
a second auxiliary plate which is located between the second electrode uncoated portion and the second electrode current collector plate and electrically connected to the second electrode uncoated portion and the second electrode current collector plate.

2. The cylindrical secondary battery of claim 1, wherein the first electrode current collector and the second electrode current collector have the same shape, but are disposed to be symmetrical to each other.

3. The cylindrical secondary battery of claim 2, wherein the first auxiliary plate and the second auxiliary plate have the same size as the first electrode collector plate and the second electrode collector plate.

4. The cylindrical secondary battery of claim 3, wherein the first auxiliary plate is formed of the same material as the first electrode current collector, and the second auxiliary plate is formed of the same material as the second electrode current collector.

5. The cylindrical secondary battery of claim 4, wherein the first auxiliary plate and the second auxiliary plate are metal foils or metal thin films.

6. The cylindrical secondary battery of claim 5, wherein the first auxiliary plate is made of copper, and the second auxiliary plate is made of aluminum.

7. The cylindrical secondary battery of claim 5, wherein the first auxiliary plate has a thickness of 8±1 µm, and the second auxiliary plate has a thickness of 12±1 µm.

8. The cylindrical secondary battery of claim 5, wherein each of the first electrode collector plate and the second electrode collector plate is welded to the first electrode uncoated portion and the second electrode uncoated portion, respectively, in a state in which the first auxiliary plate and the second auxiliary plate are disposed.
